# EUROPÄISCHE PATENTANMELDUNG

(11) **EP 0 822 640 A1**
(43) Veröffentlichungstag der Anmeldung: **04.02.1998**
(21) Anmeldenummer: 97113073.7
(22) Anmeldetag: 30.07.1997
(51) Int. Cl.: H02K 3/34, H02K 3/40

(54) **Teilentladungsfeste Niederspannungsisolierung für Wicklungen elektrischer Maschinen**

(30) Priorität: 31.07.1996 DE 19630872
(71) Anmelder: Partzsch, Thomas, 04720 Döbeln (DE)
(72) Erfinder: Partzsch, Thomas, Dipl.-Ing., 04720 Döbeln (DE); Müller, Germar, Prof. Dr.-Ing. habil., 01129 Dresden (DE)
(74) Vertreter: Weissfloh, Ingo

(57) **Zusammenfassung**

Beim Einsatz moderner gepulster Spannungswechselrichter zur Drehzahlstellung für Drehstrommaschinen treten in einzelnen Anwendungssituationen in den Wicklungen Windungs- oder Phasenschlüsse auf, die letztendlich zum verfrühten Ausfall dieser elektrischen Maschinen führen.

Eine neuartige Niederspannungsisolierung soll die Wicklung so teilentladungsfest gestalten, daß keine Lebensdauerverringerung erfolgt, keine Typleistungsreduzierung bei gleicher Baugröße notwendig ist und keine zusätzlichen Anlagenkomponennten erforderlich sind.

Die neue teilentladungsfeste Niederspannungsisolierung für die Wicklung besteht aus an sich bekannten Lackdrähten mit einer zusätzlichen Umbandelung aus glimmerhaltigen Isolierstoffbändern und einer Nutauskleidung mit Flächenisolierstoffen hoher Wärmebeständigkeit. Die Wicklung mit Imprägniermitteln wird nach dem Strom - UV - Verfahren oder dem Vakuumimrpägnierverfahren getränkt und ausgehärtet. Die Anordnung der Wickeldrähte erfolgt so, daß die Zahl paralleler Drähte und paralleler Zweige minimiert ist.

Die Anwendung erfolgt insbesondere für frequenzumrichtergespeiste Drehstrommotoren.

## Beschreibung

Es ist bekannt, daß mit dem Einsatz moderner gepulster Spannungswechselrichter zur Drehzahlstellung , das eigentlich für gelöst angesehene Problem der Ausfälle von Drehstrommaschinen durch Windungs- oder Phasenschluß in einzelnen Anwendungssituationen wieder aufgetreten ist. Es ist weiterhin bekannt, daß diese Ausfälle durch Teilentladungen auf Grund von ständig hohen impulsförmigen Spannungsbeanspruchungen entstehen. Um diese Ausfälle zu vermeiden, wurden Grenzwerte der Wicklungsbeanspruchung im Umrichterbetrieb veröffentlicht (z.B. in der Fachzeitschrift EMA Heft 3/96), diskutiert und zur Berücksichtigung bei der Maschinenauslegung und der Anlagengestaltung empfohlen. Trotzdem ist mit einer Verringerung der Lebensdauer der elektrischen Maschine zu rechnen, bzw. besteht die Notwendigkeit zusätzliche Anlagenkomponenten (z.B. Filter) zu installieren.

Der Erfindung liegt die Aufgabe zugrunde, die Wicklung für frequenzumrichtergespeist Niederspannungsdrehstrommotoren, so teilentladungsfest zu gestalten, daß keine die Lebensdauer herabsetzenden Windungs- oder Phasenschlüsse auftreten und dabei keine Reduzierung der Typleistung bei gleicher Baugröße erforderlich ist.

Erfindungsgemäß wird die Aufgabe durch den 1. Patentanspruch gelöst.

Üblicherweise arbeitet man bei der Wicklungsherstellung für Drehstrommotoren, im Baugrößenbereich, in dem Niederspannungsmotoren ausgeführt werden, aus technologischen Gründen mit einer großen Zahl paralleler Zweige und/oder Leiter. Durch die erfindungsgemäße Minimierung paralleler Zweige und oder Leiter wird der Erhöhung des Platzbedarfes durch die zusätzlich eingebrachte Umbandelung entgegengewirkt. Im Verbund mit einem System von neuartig aufeinander abgestimmten Isolierstoffen und Imprägniermitteln hoher Wärmebeständigkeit kann außerdem eine gewisse Erhöhung der Stromdichte zugelassen werden. Desweiteren verbessert sich aus Gründen der zusätzlichen Umbandelung die Beständigkeit gegen mechanische Beanspruchungen und wird außer der thermischen Alterung auch der mechanischen Alterung entgegengewirkt.

Die erfindungsgemäße Niederspannungswicklung erhöht die Spannungsfestigkeit gegenüber den durch die extrem kurzen Schaltvorgänge in den Frequenzumrichtern hervorgerufenen hohen Spannungsspitzen, vermindert die Teilentladungen zwischen den Windungen, sowie zwischen den Wicklungssträngen und gegenüber dem Blechpaket. Außerdem wird die Beständigkeit gegenüber thermischer und mechanischer Alterung verbessert.

Damit wird die Anwendung moderner hochgepulster Frequenzumrichter ohne Einschränkungen möglich. Außerdem werden Verkürzungen der Lebensdauer durch erhöhte mechanische Beanspruchungen, wie sie z.B. bei Aufzugsmotoren auftreten, vermieden.

Die Erfindung soll anhand eines Ausführungsbeispiels näher beschrieben werden.

Erfindungsgemäß wird konventioneller Lackdraht, der für ein Isoliersystem der Wärmebeständigkeitsklasse H geeignet ist und vorzugsweise mit einem Lackauftrag entsprechend Grad 2 bzw. in der Ausführung LL vorliegt, mit Glimmerbändern überlappt umbandelt. Für die Nutisolierung und die Phasenbeilage werden Flächenisolierstoffe auf Basis von Polyimid verwendet. Die Wicklung wird mit einem Imprägniermittel, das für ein Isoliersystem der Wärmebeständigkeitsklasse H geeignet ist, im Vakuum - bzw. im Vakuum-Druck-Tränkverfahren imprägniert. Die Wicklung wird aus Leitern hergestellt mit aus Sicht der Nutschlitzbreite größtmöglichem Drahtdurchmesser. Die Ausleitungen sind ebenfalls unter Verwendung von Isolierstoffen hergestellt, die für ein Isoliersystem der Wärmebeständigkeitsklasse H geeignet sind. Die Wicklung wird nach dem Tränken im Falle der Anwendung des Strom - UV - Verfahrens durch Stromwärme und im Falle der Anwendung des Vakuum- oder Vakuum-Druck-Tränkverfahrens durch herkömmliche Ofentrocknung ausgehärtet.

## Patentansprüche

1. Teilentladungsfeste Niederspannungsisolierung für Wicklungen elektrischer Maschinen,
insbesondere für frequenzumrichtergespeiste Drehstrommotoren ,
dadurch gekennzeichnet,
daß die Wicklung aus an sich bekannten Lackdrähten besteht,
daß diese Lackdrähte mit einer Umbandelung aus glimmerhaltigen Isolierstoffbändern versehen sind,
daß die Nut mit Flächenisolierstoffen hoher Wärmebeständigkeit ausgekleidet ist,
daß die Zahl paralleler Drähte und paralleler Zweige minimiert ist
und daß die Wicklungen mit Imprägniermitteln nach dem Strom - UV - Verfahren oder dem Vakuumimprägnierverfahren getränkt und ausgehärtet sind.
